# EUROPÄISCHE PATENTSCHRIFT

(11) **EP 0 463 424 B1**
(45) Veröffentlichungstag und Bekanntmachung des Hinweises auf die Patenterteilung: **08.12.1993**
(21) Anmeldenummer: 91109250.0
(22) Anmeldetag: 06.06.1991
(51) Int. Cl.: F16L 17/02

(54) **Rohrkupplung**
Pipe coupling
Raccord pour tuyaux

(30) Priorität: 18.06.1990 CH 2024/90
(43) Veröffentlichungstag der Anmeldung: 02.01.1992
(73) Patentinhaber: STRAUB FEDERNFABRIK AG, CH-7323 Wangs (CH)
(72) Erfinder: Straub, Immanuel, CH-7323 Wangs (CH)
(74) Vertreter: Patentanwälte Schaad, Balass, Menzl & Partner AG

(56) Entgegenhaltungen:
- DE-A- 2 428 101

## Beschreibung

Die Erfindung betrifft eine Rohrkupplung gemäss dem Oberbegriff des Anspruches 1.

Rohrkupplungen dieser Art -wie sie beispielsweise aus der DE-C-24 28 101 bekanntgeworden sind- haben die Rohrverbindungstechnik revolutioniert. Einerseits ergibt sich nämlich aus dem Umstand, dass die Dichtlippen vor der Montage in bezug auf den Nenndurchmesser der zu verbindenden Rohre Uebermass aufweisen, die Möglichkeit, die Kupplungen auf die Rohre aufzuschieben und sie mit diesen zusammen zu verlegen, wobei die Rohre einfach aneinandergereiht und die Kupplungen dann über die Stossfugen geschoben werden können. Andererseits führt das im Umfangssinne erfolgende Stauchen der Lippendichtung durch das verengungsfähige Gehäuse dazu, dass die radiale Dicke der Manschette zunimmt, so dass die Manschette nicht nur durch das Gehäuse gegen die Rohrwandung gepresst wird, sondern selbst das Bestreben hat, sich an die Rohroberfläche anzuschmiegen. Daraus ergibt sich ein Dichtvermögen, das auch bei rauher oder unregelmässiger Rohroberfläche nichts zu wünschen übrig lässt, zudem noch auf Dauer erhalten bleibt.

Aufgabe der vorliegenden Erfindung ist die Ausgestaltung der bekannten Rohrkupplung derart, dass die Verengungsfähigkeit des Gehäuses zur Steigerung der Unempfindlichkeit gegenüber Veränderungen hinsichtlich der Relativlage der abdichtenden bzw. abzudichtenden Teile ausgenützt und die ohnehin gegebene Anpassungsfähigkeit der Kupplung an unregelmässige Rohre weiter erhöht wird.

Diese Aufgabe wird durch die Merkmale des kennzeichnenden Teiles des Anspruches 1 gelöst.

Dank der Gleitringe befindet sich die Manschette in einem auch stirnseitig abgeschlossenen Raum; die Wandstärke in dem die Dichtlippen mit dem Manschettensteg verbindenden Wurzelbereich kann daher auf ein Minimum beschränkt werden oder umgekehrt können an diesen Wurzelbereich in axialer Richtung anschliessende Verstärkungen in Form von Verdikkungen entfallen. Bei einem gegebenen Abstand der Dichtkanten der Dichtlippen wird die Manschette -in Achsrichtung gemessen- schlanker, wobei umgekehrt ihre Walkfähigkeit im Wurzelbereich eine Steigerung erfährt. Dies wirkt sich bei dilatationsbedingten Relativbewegungen der Rohre besonders günstig aus: Beim Hineinwachsen der Rohre in die Kupplung setzt die Manschette entsprechend weniger Widerstand entgegen; ziehen sich die Rohre zurück, so verhindern die Gleitringe die Mitnahme von Manschettenmaterial in den Ringspalt, der zwischen den radialen Endwänden des Kupplungsgehäuses und der Rohrwandung verbleiben muss, um eine Berührung zwischen letzterer und dem Kupplungsgehäuse unbedingt zu vermeiden. Dementsprechend muss denn auch der Ringspalt nicht auf das absolute Minimum beschränkt werden, wobei die Anpassungsfähigkeit der Kupplung an unregelmässige, z.B. oval gewordene Rohre erhöht wird. Dies gilt auch dann, wenn die Rohre nicht genau miteinander fluchten oder nach der Montage der Kupplung in eine abgewinkelte Lage geraten, da die Lippenform, die Lippengrösse und der Lippenabstand auf das Optimum für das Abdichten ausgerichtet werden können und darüber hinaus kein unnötiger Aufwand an Material bzw. Dimension erforderlich ist. Durch die entsprechende Geschmeidigkeit verringert sich natürlich die dilatationsbedingte Abnützung und erhöht sich die Lebensdauer der Manschette. Grösser wird auch die Druckfestigkeit der Kupplung, da die Gleitringe auch unter hohem Druck als Stützringe und bei Dilatation als Abstreifringe im Spaltbereich wirken.

Der Gleitsitz zwischen der Rohrwandung und den Gleitringen kann, nebst der Stauchbarkeit bzw. dem Stauchen der Gleitringe durch das Gehäuse, auch noch dadurch dauerhaft sichergestellt werden, dass die Manschette an ihren Stirnseiten je einen den Gleitring satt umgreifenden Fortsatz besitzt, der zudem noch einen sich nach aussen verjüngenden Querschnitt aufweisen kann, wobei der Gleitring mit dem Gehäuse einen Ringraum von entsprechendem Profil bildet. Dies führt dazu, dass die Vorspannung des gestauchten Manschettenmaterials bzw. der innere Druck in den Ringraum einwirkt und dadurch das wärmebedingte Wachsen des Kupplungsgehäuses kompensiert wird. Auch in diesem Fall wirken die Gleitringe als eine Art Ringanschlag, wobei sie das übermässige Quetschen der Manschette im Dichtlippen-Wulst-Bereich verhindern.

Ausbildungsbeispiele des Erfindungsgegenstandes sind in den Zeichnungen dargestellt. Es zeigen
- Figur 1: in perspektischer Darstellung eine vormontierte Kupplung mit einem noch aufgeweiteten Gehäuse mit der ungestauchten Manschette und den ebenfalls noch nicht gestauchten Gleitringen
- Figuren 2-9: in Axialschnitt gemäss der Linie II-II in Figur 1 verschiedene Profilvarianten und
- Figur 10: einen Querschnitt nach der Linie X in Figur 9.

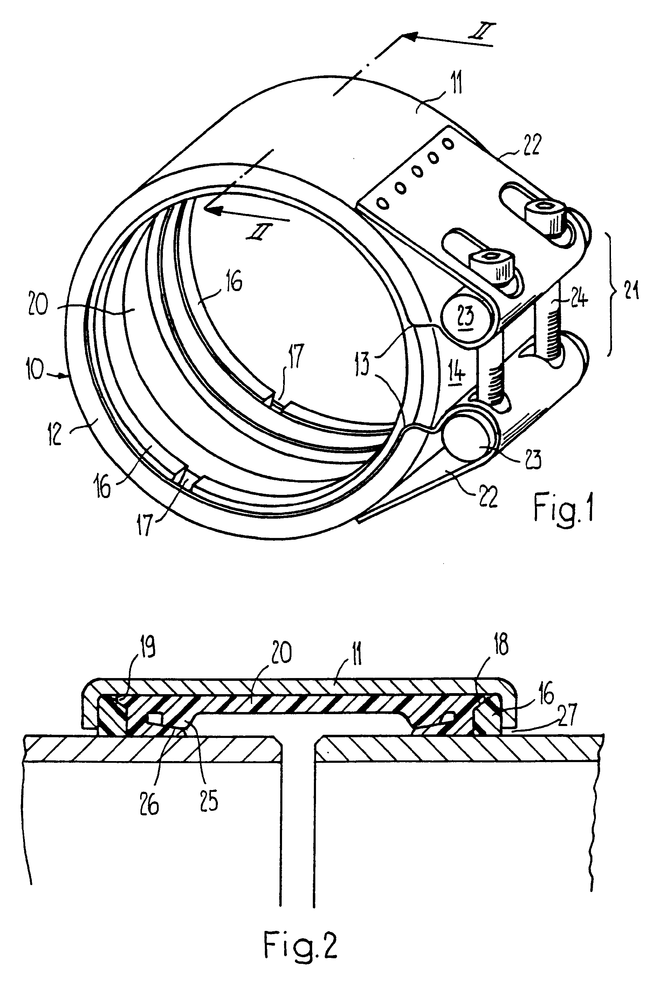

Das in Figur 1 dargestellte, der Länge nach gespaltene Gehäuse 10 besitzt einen zylindrischen Mantel 11 und einwärts gebogene Endwände 12. Das den Gehäusespalt 13 überbrückende Einlageblech 14 ist analog ausgebildet. Anliegend an die Innenseite der umgebogenen Endwände 12 des Gehäuses bzw. des Einlageblechs sind als Sprengringe ausgebildete Gleitringe 16 vorgesehen, deren Spalt 17 in dem dargestellten vormontierten Zustand der Kupplung noch offen ist. Bei dieser Ausführung bestehen die Gleitringe 16 vorteilhaft aus einem molekularen natürlichen oder künstlichen stauchbaren Stoff, vorzugsweise aus Polyäthylen, wobei sie beispielsweise das in Figur 2 gezeigte trapezförmige Querschnittsprofil aufweisen können. Zwischen dem zylindrischen Mantel 11 des Gehäuses und dem Umfang der Gleitringe entsteht dadurch jeweils ein axial nach innen offener keilförmiger Raum 18, in den ein stirnseitiger Fortsatz 19 der sich zwischen den Gleitringen befindlichen im Querschnitt etwa C-förmigen Manschette 20 eingreift. Die Gleitringe sind also in jedem Fall von diesem Ringfortsatz der Manschette umschlossen, wobei dennoch der Spalt 17 der Gleitringe noch offen ist, wenn die Kupplung sich im vormontierten, aufgeweiteten Zustand befindet.

Das Gehäuse 10 weist einen Verschluss 21 auf, bestehend aus am Gehäuse angeschweissten Spannlaschen 22, von diesen umschlossenen Spannstäben 23 und Spannschrauben 24. Die lichte Weite der Kupplung (Gehäuse, Manschette, Gleitringe) ist in dem in Figur 1 dargestellten Zustand so reichlich bemessen, dass gegenüber dem Aussendurchmesser der Rohre in jedem Fall ein Uebermass vorhanden ist, so dass die Kupplung leicht über das eine Rohr geschoben und nach Verlegen der Rohre auch auf das andere Rohrende hinübergeschoben werden kann. Nach Anziehen der beiden Spannschrauben 24 lässt sich der Innendurchmesser des gesamten Gehäuses 10 wie bei einer Rohrschelle verkleinern, wobei der Längsspalt 13 des Gehäuses verringert wird und das Einlageblech 14 immer mehr in das Gehäuse eintaucht. Hierbei wird die Manschette 20 im Umfangssinne gestaucht, wobei die an den Manschettensteg angeformten Wülste 25 die Dichtlippen 26 zur satten Auflage auf die Rohrwandung bringen, wie dies Figur 2 erkennen lässt. Auch die Gleitringe verengen sich, wobei die Anordnung so getroffen ist, dass ihr Spalt 17 schliesst, gerade bevor sie an der Rohrwandung zur Anlage kommen. Zum weiteren Anziehen der Schrauben werden die Gleitringe, ähnlich wie bis anhin die Manschette, gestaucht, wobei sie eine erheblich geringere materialbedingte Stauchbarkeit aufweisen als die Manschette. Natürlich ist dafür gesorgt, dass die Gleitringe an der Aussenwandung der Rohre anliegen. Der Gleitsitz bleibt dadurch erhalten, dass die (gestauchten) Fortsätze der Manschette in den keilförmigen Raum zwischen den Gleitringen und dem zylindrischen Mantel des Gehäuses eingreifen. Auch der innere Druck des abgedichteten Mediums erzeugt über die Fortsätze eine radiale Anpresskraft der Gleitringe gegen die Rohrwandung, wobei u.a. das Aufweiten des Gehäuses -unter Druck oder Wärmewirkung- kompensiert wird.

Aus Figur 2 ergibt sich, dass der Ringspalt 27 zwischen den Endwänden 12 des Gehäuses 10 und den Rohrwandungen durch die Gleitringe geschlossen ist, so dass die Spaltbreite erheblich sein und eine Berührung des Kupplungsgehäuses mit der Rohrwandung mit Sicherheit vermieden werden kann.

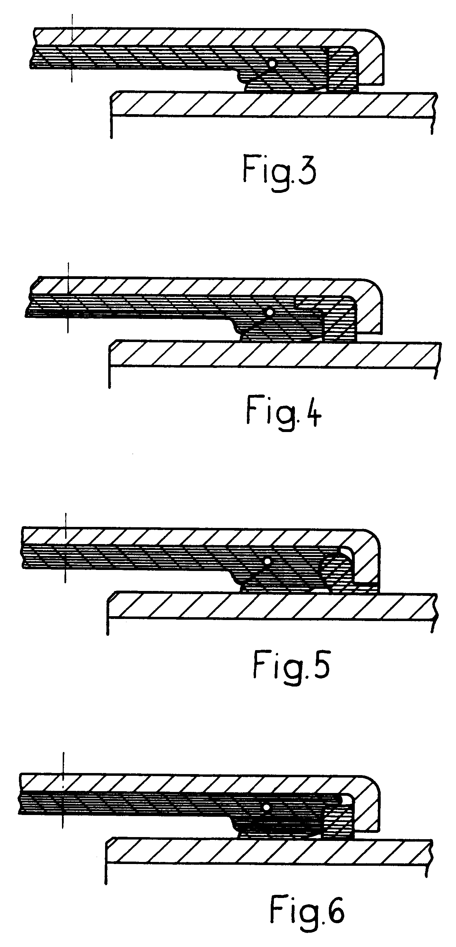

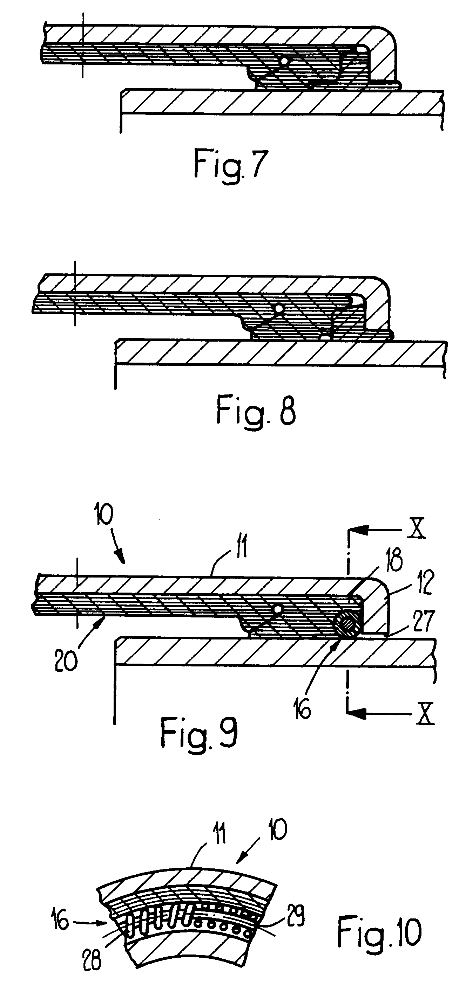

Die in den Figuren 3-8 dargestellten Profile der Gleitringe sind ohne weiteres verständlich. Im folgenden soll daher nur die Ausführungsform gemäss den Figuren 9 und 10 besonders erläutert werden.

Figur 10 lässt einen Gleitring in Form einer Schraubenfeder 28 erkennen, die zu einem (offenen) Ring gebogen in das Kupplungsgehäuse eingelegt ist, wobei die Windungen im vormontierten Zustand der Kupplung noch nicht aneinander anliegen. Ein Sprengring 29 aus Draht greift von beiden Enden her in die Schraubenfeder 28 ein und bildet eine Art Verschluss, der die beiden Enden der Schraubenfeder miteinander zu einem Gleitring verbindet. Der Sprengring 29 weist gegenüber dem noch aufgeweiteten Gehäuse 10 Uebermass auf. Die Anordnung ist derart, dass beim Anziehen der Spannschrauben und Verengung des Gehäuses der Gleitring 28-29 verengt wird, wobei im Endzustand die Windungen der Schraubenfeder sich näherkommen, gegebenenfalls berühren. Der Sprengring 29 stützt natürlich die Windungen der Schraubenfeder 28 in jeder Phase gegen Umkippen. Auch bei dieser Ausführung weist die Manschette 20 Ringfortsätze 18 auf, die die Gleitringe 28-29 umgreifen, so dass diese, wie vorne erläutert, stets im Gleitsitz der Rohrwandung bleiben. Wie bei entsprechend profilierten anderen Gleitringvarianten gilt auch hier, dass der innere Druck sich in axialer Richtung voll auswirkt und die Gleitringe entsprechend satt gegen die Endwände 12 des Gehäuses drückt, während über die Ringfortsätze 18 der Manschette in radialer Richtung nur eine reduzierte Anpresskraft wirkt, so dass auch beschichtete Rohre unter dem Gleitsitz nicht leiden.

## Patentansprüche

1. Rohrkupplung mit einer im Querschnitt etwa C-förmigen Elastomer-Dichtungsmanschette (20), deren sich gegeneinander erstreckende Dichtlippen (26) mittels je eines an der Manschette (20) angeformten Ringwulstes (25) auf dem Manschettensteg abgestützt sind und die von einem durch einen Verschluss (21) mit Spannbolzen (24) verengbaren Gehäuse (10) mit radialen Endwänden (12) und von einer zwischen Manschette (20) und Gehäuse (10) eingelegten, den Längsspalt (13) des Gehäuses (10) überbrückenden Blecheinlage (14) umschlossen ist, wobei die Dichtlippen (26) der Manschette (20) vor dem Zusammenziehen des Gehäuses (10) in bezug auf den Nenndurchmesser der zu kuppelnden Rohre Uebermass aufweisen und beim Zusammenziehen des Gehäuses (10) durch Druckwirkung der Ringwülste (25) im Umfangssinne stauchbar und satt an die Rohrwandung anpressbar sind, dadurch gekennzeichnet, dass der im montierten Zustand der Kupplung zwischen den radialen Endwänden (12) des Kupplungsgehäuses (10) und der Rohrwandung verbleibende Ringspalt (27) je durch einen im Umfangssinne stauchbaren Gleitring (16) verschlossen ist, der an der betreffenden Endwand (12) anliegend durch den zylindrischen Mantel (11) des Kupplungsgehäuses (10) auf dem Rohr zur Auflage bringbar ist und mit demselben einen Gleitsitz bildet.

2. Rohrkupplung nach Anspruch 1, dadurch gekennzeichnet, dass die Manschette (20) an ihren Stirnseiten je einen den Gleitring (16) satt umgreifenden Fortsatz (19) aufweist.

3. Rohrkupplung nach Anspruch 2, dadurch gekennzeichnet, dass der Fortsatz (19) einen sich nach aussen verjüngenden Querschnitt aufweist und der Gleitring (16) mit dem Gehäuse (10-11) einen Ringraum (18) von entsprechendem Profil bildet.

4. Rohrkupplung nach einem der Ansprüche 1-3, dadurch gekennzeichnet, dass der Gleitring (16) aus einem hochmolekularen natürlichen oder künstlichen stauchbaren Stoff besteht, vorzugsweise aus Polyäthylen.

5. Rohrkupplung nach Anspruch 4, dadurch gekennzeichnet, dass der Gleitring (16) so als Sprengring (16-17) ausgebildet ist, dass sein Schlitz (17) beim Zusammenziehen des Gehäuses (10) unmittelbar vor der Endstellung schliesst.

6. Rohrkupplung nach einem der Ansprüche 1-3, dadurch gekennzeichnet, dass der Gleitring (16) aus einer Schraubenfeder (28) mit nach dem Stauchen dicht anliegenden Windungen sowie aus einem drahtförmigen Sprengring (29) besteht, der in die Schraubenfeder (28) von deren beiden Enden her eingreift.

7. Rohrkupplung nach Anspruch 6, dadurch gekennzeichnet, dass der Sprengring (29) in bezug auf die Weite des Gehäuses vor dem Zusammenziehen Uebermass aufweist.

## Claims

1. Pipe coupling having a cross-sectionally approximately C-shaped elastomer gasket (20), the sealing lips (26) of which, extending towards each other, are supported on the gasket web by means of in each case an annular bead (25) moulded on the gasket (20), and which is enclosed by a housing (10), having radial end walls (12) and capable of being constricted by a closure (21) with tensioning bolts (24), and by a sheet-metal insert (14), inserted between gasket (20) and housing (10) and bridging the longitudinal gap (13) of the housing (10), in which arrangement, before the drawing together of the housing (10), the sealing lips (26) of the gasket (20) are overdimensioned with respect to the nominal diameter of the pipes to be coupled and, upon drawing together of the housing (10), can be compressed circumferentially by pressure exerted by the annular beads (25) and can be pressed snugly against the pipe wall, characterised in that the annular gap (27) remaining between the radial end walls (12) of the coupling housing (10) and the pipe wall in the fitted state of the coupling is closed in each case by a circumferentially compressible sliding ring (16), which while bearing against the end wall (12) concerned can be brought to rest by the cylindrical casing (11) of the coupling housing (10) on the pipe and forms a sliding fit with the same.

2. Pipe coupling according to Claim 1, characterised in that the gasket (20) has on its end faces in each case a continuation (19) snugly embracing the sliding ring (16).

3. Pipe coupling according to Claim 2, characterised in that the continuation (19) has an outwardly tapering cross-section and the sliding ring (16) forms with the housing (10-11) an annular space (18) of corresponding profile.

4. Pipe coupling according to one of Claims 1-3, characterised in that the sliding ring (16) consists of a natural or synthetic compressible material of high molecular weight, preferably of polyethylene.

5. Pipe coupling according to Claim 4, characterised in that the sliding ring (16) is designed as a snap ring (16-17) such that, upon drawing together of the housing (10), its slit (17) closes immediately before the end position.

6. Pipe coupling according to one of Claims 1-3, characterised in that the sliding ring (16) comprises a helical spring (28), with turns bearing closely against one another after compressing, and a wire-shaped snap ring (29), which engages in the helical spring (28) from the two ends of the latter.

7. Pipe coupling according to Claim 6, characterised in that, before drawing together, the snap ring (29) is overdimensioned with respect to the width of the housing.

## Revendications

1. Raccord pour tuyaux, comprenant un manchon d'étanchéité en élastomère (20) qui présente une section transversale sensiblement en forme de C et dont les lèvres d'étanchéité (26) qui s'étendent l'une vers l'autre sont chacune soutenues sur la barrette du manchon (20) par un bourrelet annulaire (25) conformé sur le manchon (20), et qui est entouré par un carter (10) avec des parois terminales (12) radiales, pouvant être rétréci au moyen d'une fermeture (21) avec des boulons de serrage (24) et par une tôle de revêtement (14) insérée entre le manchon (20) et le carter (10) et recouvrant la fente longitudinale (13) du carter (10), les lèvres d'étanchéité (26) du manchon (20) présentant avant le serrage du carter (10) une surmesure par rapport au diamètre nominal des tuyaux à raccorder et pouvant être comprimées, lors du serrage du carter (10) par l'effet de compression des bourrelets (25), dans le sens circonférentiel et appliquées à plat contre la paroi du tuyau, **caractérisé en ce** que la fente annulaire (27) subsistant à l'état monté du raccord entre les parois terminales (12) radiales du carter (10) du raccord et la paroi du tuyau est respectivement fermée par un anneau de glissement (16) compressible dans le sens circonférentiel qui, appliqué contre la paroi terminale (12) correspondante, peut être amené en contact avec le tuyau par l'enveloppe cylindrique (11) du carter (10) du raccord et forme avec ledit tuyau un ajustement glissant.

2. Raccord pour tuyaux selon la revendication 1, caractérisé en ce que le manchon (20) présente sur chacune de ses faces frontales un prolongement (19) qui entoure à plat point l'anneau de glissement (16).

3. Raccord pour tuyaux selon la revendication 2, caractérisé en ce que le prolongement (19) présente une section transversale qui se rétrécit vers l'extérieur et que l'anneau de glissement (16) forme avec le carter (10-11) un espace annulaire (18) avec un profil correspondant.

4. Raccord pour tuyaux selon l'une des revendications 1 à 3, caractérisé en ce que l'anneau de glissement (16) est constitué d'une matière naturelle ou synthétique compressible à haute densité moléculaire, de préférence de polyéthylène.

5. Raccord pour tuyaux selon la revendication 4, caractérisé en ce que l'anneau de glissement (16) est conformé en jonc (16-17) de telle façon que sa fente (17) se ferme, lors de la contraction du carter (10), immédiatement avant d'atteindre la position extrême.

6. Raccord pour tuyaux selon l'une des revendications 1 à 3, caractérisé en ce que l'anneau de glissement (16) se compose d'un ressort cylindrique (28) dont les spires sont serrées les unes contre les autres après la compression, ainsi que d'un jonc (29) en fil de fer qui s'engage dans le ressort cylindrique (28) à partir des deux extrémités de celui-ci.

7. Raccord pour tuyaux selon la revendication 6, caractérisé en ce que le jonc (29) présente une surmesure par rapport à l'ouverture du carter avant la contraction.
